(19)

Europäisches
Patentamt
European
Patent Office
Office européen
des brevets

(11) **EP 2 980 292 A1**

(12) **EUROPEAN PATENT APPLICATION**
published in accordance with Art. 153(4) EPC

(43) Date of publication:
**03.02.2016 Bulletin 2016/05**

(21) Application number: **14774395.9**

(22) Date of filing: **19.03.2014**

(51) Int Cl.:
***D04H 1/541*** *(2012.01)*    ***B29C 45/14*** *(2006.01)*
***D04H 1/4242*** *(2012.01)*

(86) International application number:
**PCT/JP2014/057477**

(87) International publication number:
**WO 2014/156861 (02.10.2014 Gazette 2014/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.03.2013   JP 2013081582
17.04.2013   JP 2013097926
23.07.2013   JP 2013152418
23.07.2013   JP 2013152419**

(71) Applicants:
• **Art&Tech Co., Ltd.**
**Tokyo 107-0062 (JP)**
• **Mitsubishi Gas Chemical Company, Inc.**
**Tokyo 100-8324 (JP)**

(72) Inventors:
• **WATANABE, Yasushi**
**Tokyo 107-0062 (JP)**
• **JOHNO, Hideharu**
**Tokyo 107-0062 (JP)**
• **MATSUMOTO, Nobuhiko**
**Hiratsuka-shi**
**Kanagawa 254-0016 (JP)**
• **MITADERA, Jun**
**Hiratsuka-shi**
**Kanagawa 254-0016 (JP)**
• **KUBO, Haruya**
**Tokyo 100-8324 (JP)**

(74) Representative: **Müller-Boré & Partner**
**Patentanwälte PartG mbB**
**Friedenheimer Brücke 21**
**80639 München (DE)**

(54) **NONWOVEN FABRIC, SHEET, FILM, MULTILAYER SHEET, MOLDED ARTICLE, AND METHOD FOR PRODUCING NONWOVEN FABRIC**

(57)    Provided is a non-weave fabric containing a thermoplastic resin fiber and a carbon fiber as major ingredients, capable of yielding a resin molded article when molded thereinto, which is excellent in mechanical strength and in appearance, and, a multi-layered sheet having the non-weave fabric and a textile layer, which is excellent in mechanical strength and less likely to warp.

The non-weave fabric includes a thermoplastic resin fiber (A), a carbon fiber (B), and a thermoplastic resin (C) having a glass transition temperature lower than that of the thermoplastic resin fiber (A), the ratio of content of the thermoplastic resin (C) being 1 to 50% by weight of the total content of the thermoplastic resin fiber (A) and the thermoplastic resin (C).

EP 2 980 292 A1

**Description**

TECHNICAL FIELD

This invention relates to a non-weave fabric containing a thermoplastic resin fiber and a carbon fiber, and also to a sheet or a film obtainable by hot-pressing the non-weave fabric. This invention also relates to a multi-layered sheet obtainable by hot-pressing the non-weave fabric and a textile layer, and also to a molded article obtainable by insert molding of the non-weave fabric and so forth.

BACKGROUND ART

Manufacture of non-weave fabric has been investigated. For example, Patent Literature 1 discloses manufacture of a non-weave fabric of carbon fiber by hydroentangling. More specifically, in the hydroentangling, randomly-arranged carbon fibers are stacked, and made into a non-weave fabric under a high pressure water flow.

Patent Literature 2 discloses a non-weave fabric composed of a carbon fiber and a thermoplastic resin fiber.

Meanwhile, in recent technical fields regarding enclosures of electronic instruments and home appliances, and enclosures of car interior parts, it has extensively been discussed to stack a decorating member over the exterior of the enclosure. Many of such enclosures are generally made of molded article mainly composed of resins. For this sort of resin molded articles, a variety of decorating parts are indispensable elements for differentiation from other products. In such situation, some manufacturers have provided a variety of decorating members to the resin molded article even for a single kind of product, so as to allow the customer to optionally choose a decorative design. For example, Patent Literature 3 discloses a fabric style decorating sheet configured by a non-weave fabric made of polyethylene terephthalate resin or the like, and a high luminance layer having a metallic gross formed on the surface thereof. As a technique relevant to the field, there has been proposed an enclosure having a textile/resin laminated structure, which includes a stack of a transparent acrylic film and a textile layer bonded to each other while placing an adhesive resin layer in between, and a base resin layer adhered to the textile layer while allowing itself to impregnate into gaps around the individual fibers (see Patent Literature 4 and Patent Literature 5, for example). According to Patent Literature 4 and Patent Literature 5, adhesiveness of the textile layer to the base resin layer, and impact resistance and scratch resistance of the surface of the textile layer are improved, and also the textile layer may be prevented from wrinkling and from causing thereon deformation of picture or pattern.

CITATION LIST

PATENT LITERATURE

[Patent Literature 1] JP-A-2002-266217
[Patent Literature 2] JP-A-2011-190549
[Patent Literature 3] JP-A-2004-34527
[Patent Literature 4] International Patent WO2012/105664, pamphlet
[Patent Literature 5] International Patent WO2012/105665, pamphlet

SUMMARY OF THE INVENTION

TECHNICAL PROBLEM

In conventional trials for improving, by using carbon fiber, the strength of a molded article which is only as thick as a resin film or resin sheet, many of the trials of injection molding of a compound, having the carbon fiber and the resin preliminarily mixed therein, have needed a very high pressure from the viewpoints of crystallization speed and fluidity. It has therefore been substantially difficult to manufacture, by injection molding, a thin molded article with a large area. Also if tried to obtain a thin molded article, by forming the compound which is composed of carbon fiber and a resin into a film or sheet, the carbon fiber has been shortened excessively in the process of compounding and or succeeding melt extrusion, so that a target strength has not been achieved.

While Patent Literature 2 discloses the non-weave fabric which contains a thermoplastic resin fiber and a carbon fiber, the present inventors found from our investigations that the mechanical strength was insufficient. Moreover, although a good appearance is required for the molded article for some applications, the appearance was found to be poor.

It is therefore a first object of this invention to solve the above-described problems, and to provide a non-weave fabric which contains a thermoplastic resin fiber and a carbon fiber, capable of yielding a resin molded article when molded thereinto, which is excellent in mechanical strength. It is another object of this invention to provide a non-weave fabric capable of yielding a molded article when molded thereinto, which is excellent in appearance.

Investigations by the present inventors also revealed that a multi-layered sheet, configured by a non-weave fabric and a textile layer provided thereto as described above, may occasionally warp.

It is therefore a second object of this invention to solve the above-described problem, and to provide a multi-layered sheet having a textile layer and containing a resin, which is excellent in mechanical strength and less likely to warp.

SOLUTION TO PROBLEM

After intensive studies conducted under such circumstances, the present inventors found that a non-weave fabric, which contains a thermoplastic resin fiber and a carbon fiber as major ingredients, may be provided by bonding a thermoplastic resin fiber (A) and a carbon fiber (B), using a thermoplastic resin (C) having a glass transition temperature lower than a glass transition temperature of the thermoplastic resin fiber (A). The finding led the inventors to complete this invention. More specifically, the above-described problems were solved by the means <1> below, and preferably by means <2> to <26>.

<1> A non-weave fabric comprising: a thermoplastic resin fiber (A); a carbon fiber (B); and a thermoplastic resin (C) having a glass transition temperature lower than a glass transition temperature of the thermoplastic resin fiber (A), which comprises the thermoplastic resin (C) in a content of 1 to 50% by weight, relative to a total content of the thermoplastic resin fiber (A) and the thermoplastic resin (C) .

<2> The non-weave fabric of <1>, wherein the carbon fiber (B) has an average fiber length of 1 to 15 mm.

<3> The non-weave fabric of <1> or <2>, wherein the thermoplastic resin fiber (A) has an average fiber length of 1 to 15 mm.

<4> The non-weave fabric of any one of <1> to <3>, wherein the thermoplastic resin (C) is in a form of a fiber.

<5> The non-weave fabric of any one of <1> to <3>, wherein the thermoplastic resin (C) is in a form of a fiber having an average fiber length of 1 to 15 mm.

<6> The non-weave fabric of any one of <1> to <5>, which has a difference between the average fiber length of the thermoplastic resin fiber (A) and the average fiber length of the carbon fiber (B) of 10 mm or smaller.

<7> The non-weave fabric of any one of <1> to <6>, which has a ratio of mixing (ratio by weight) of the thermoplastic resin fiber (A) and the carbon fiber (B) of 99:1 to 25:75.

<8> The non-weave fabric of any one of <1> to <7>, wherein the thermoplastic resin fiber (A) is selected from polyester resin, polyamide resin, polyolefin resin, polypropylene resin, polyethylene resin, acrylic resin, polyacetal resin and polycarbonate resin.

<9> A sheet or a film obtainable by hot-pressing the non-weave fabric described in any one of <1> to <8>.

<10> A sheet or a film obtainable by hot-pressing the non-weave fabric described in any one of <1> to <8>, with a thermoplastic resin (D).

<11> The sheet or the film of <10>, wherein the thermoplastic resin (D) is in a form of a thermoplastic resin film.

<12> A multi-layered sheet obtainable by hot-pressing the non-weave fabric described in any one of <1> to <8> with a textile layer, or, a multi-layered sheet obtainable by stacking the non-weave fabric described in any one of <1> to <8> and a textile layer, and injecting a thermoplastic resin (E) onto the non-weave fabric to mold.

<13> The multi-layered sheet of <12>, further comprising an adhesive layer between the non-weave fabric and the textile layer.

<14> The multi-layered sheet of <13>, wherein the adhesive layer contains a polyvinyl acetal-based resin.

<15> The multi-layered sheet of any one of <12> to <14>, further comprising a thermoplastic resin (D), in addition to the non-weave fabric and the textile layer.

<16> The multi-layered sheet of <15>, wherein the thermoplastic resin (D) is in a form of a resin film.

<17> A molded article obtainable by molding the non-weave fabric described in any one of <1> to <8>, or, the sheet or the film described in any one of <9> to <11>, or, the multi-layered sheet described in any one of <12> to <16>, with a thermoplastic resin (E) by insert molding.

<18> A method for manufacturing a non-weave fabric comprising: wet-laying, in liquid, a composition which comprises a thermoplastic resin fiber (A), a carbon fiber (B), and a thermoplastic resin (C) having a glass transition temperature lower than a glass transition temperature of the thermoplastic resin fiber (A); wherein the composition comprises the thermoplastic resin (C) in a content of 1 to 50% by weight, relative to a total content of the thermoplastic resin fiber (A) and the thermoplastic resin (C).

<19> The method for manufacturing a non-weave fabric of <18>, wherein the wet-laying in liquid is followed by heating at a temperature not lower than the glass transition temperature of the thermoplastic resin (C).

<20> The method for manufacturing a non-weave fabric of <18> or <19>, wherein the carbon fiber (B) has an average fiber length of 1 to 15 mm.

<21> The method for manufacturing a non-weave fabric of any one of <18> to <20>, wherein the thermoplastic resin fiber (A) has an average fiber length of 1 to 15 mm.

<22> The method for manufacturing a non-weave fabric of any one of <18> to <21>, wherein the thermoplastic resin (C) is in a form of a fiber.

<23> The method for manufacturing a non-weave fabric of any one of <18> to <22>, wherein the thermoplastic resin (C) is in a form of a fiber having an average fiber length of 1 to 15 mm.

<24> The method for manufacturing a non-weave fabric of any one of <18> to <23>, wherein the composition has a difference between the average fiber length of the thermoplastic resin fiber (A) and the average fiber length of the carbon fiber (B) of 10 mm or smaller.

<25> The method for manufacturing a non-weave fabric of any one of <18> to <24>, wherein the composition has a ratio of mixing (ratio by weight) of the thermoplastic resin fiber (A) and the carbon fiber (B) of 99:1 to 25:75.

<26> The method for manufacturing a non-weave fabric of any one of <18> to <25>, wherein the thermoplastic resin fiber (A) is selected from polyester resin, polyamide resin, polyolefin resin, polypropylene resin, polyethylene resin, acrylic resin, polyacetal resin and polycarbonate resin.

## ADVANTAGEOUS EFFECTS OF INVENTION

It now became possible to provide a non-weave fabric which contains a thermoplastic resin fiber and a carbon fiber, capable of yielding a resin molded article when molded thereinto, which is excellent in mechanical strength. It also became possible to provide a non-weave fabric, capable of yielding a molded article when molded thereinto, which is excellent in appearance.

It also became possible to provide a multi-layered sheet having a textile layer, and is excellent in mechanical strength and less likely to warp.

## BRIEF DESCRIPTION OF DRAWINGS

[FIG. 1] A perspective view illustrating an exemplary enclosure in this invention.
[FIG. 2] A cross sectional view illustrating an exemplary cross section taken along line II-II in FIG. 1.
[FIG. 3] A cross sectional view illustrating an exemplary cross section taken along line III-III in FIG. 1.
[FIG. 4a] to [FIG. 4d] Schematic drawings illustrating steps of insert molding.

## DESCRIPTION OF EMBODIMENTS

This invention will be detailed below. In this specification, all numerical ranges expressed using "to" with preceding and succeeding numerals are defined to contain these numerals as the lower and upper limit values. "Major ingredient" in this inventions refers to an ingredient the content of which is predominant. Note, however, that this specification occasionally uses the description of "non-weave fabric which contains a thermoplastic resin fiber (A) and a carbon fiber (B) as major ingredients", which means that the total content of the thermoplastic resin fiber (A) and the carbon fiber (B) accounts for a majority of the non-weave fabric.

The non-weave fabric of this invention contains the thermoplastic resin fiber (A), the carbon fiber (B), and the thermoplastic resin (C) having a glass transition temperature lower than a glass transition temperature of the thermoplastic resin fiber (A), characterized in that the thermoplastic resin (C) contained in a content of 1 to 50% by weight, relative to a total content of the thermoplastic resin fiber (A) and the thermoplastic resin (C). In other words, the value of (C) / ((A) + (C)) (% by weight) falls in the range from 1 to 50 (% by weight). In the non-weave fabric which contains the thermoplastic resin fiber (A) and the carbon fiber (B) as major ingredients, the thermoplastic resin fiber (A) and the carbon fiber (B) may appropriately be combined, by using the thermoplastic resin (C) having a glass transition temperature lower than a glass transition temperature of the thermoplastic resin fiber (A). Since the thermoplastic resin (C) has a glass transition temperature lower than a glass transition temperature of the thermoplastic resin fiber (A), the thermoplastic resin fiber (A) may be kept in its intact fiber form in the non-weave fabric. The non-weave fabric thus configured is excellent in mechanical strength, and is versatile as a material for resin molded articles with a variety of shapes.

One possible form of a fabric-like composite material, which contains the thermoplastic resin fiber (A) and the carbon fiber (B), would be a fabric woven by a blended yarn manufactured by using the thermoplastic resin fiber (A) and the carbon fiber (B) as major ingredients. The blended yarn, however, disadvantageously needs a large-scale equipment for the manufacture. In contrast, the non-weave fabric of this invention may be manufactured by a simple apparatus as described later.

The non-weave fabric (before hot-pressed) used in this invention preferably has a thickness of 0.05 to 30 mm for example, more preferably 0.1 to 10 mm, and furthermore preferably 0.5 to 5 mm, but not specifically limited.

<Thermoplastic Resin Fiber (A)>

The thermoplastic resin fiber (A) used in this invention is arbitrarily selectable from known ones without special limitation, so long as it is a thermoplastic resin fiber, and is generally used in the form of chopped fiber cut in an arbitrary length from a filament of the thermoplastic resin fiber.

The thermoplastic resin fiber (A) used in this invention preferably has an average fiber length of 1 to 20 mm, more preferably 1 to 15 mm, furthermore preferably 3 to 15 mm, and particularly 3 to 12 mm. With the average fiber length controlled to 1 mm or longer, the molded article using the non-weave fabric will have an improved mechanical strength, whereas with the length controlled to 20 mm or shorter, and particularly 15 mm or shorter, the thermoplastic resin fiber (A) will be dispersed more uniformly in the non-weave fabric. The average fiber length is determined by sampling approximately 20 thermoplastic resin fibers (A) from the non-weave fabric, by measuring the length, and by calculating the arithmetic mean.

The thermoplastic resin fiber (A) used in this invention is generally manufactured using a thermoplastic resin filament (multi-filament) in which the thermoplastic resin fiber are twisted into a bundle. A single thermoplastic resin filament preferably has a total fineness of 37 to 600 D, more preferably 50 to 500 D, and furthermore preferably 150 to 400 D. The thermoplastic resin filament is preferably configured by 1 to 200 f, more preferably 1 to 100 f, furthermore preferably 5 to 80 f, and particularly 20 to 70 f.

The thermoplastic resin fiber (A) used in this invention preferably has a tensile strength of 2 to 10 gf/d.

Although variable depending on species of the resin, the thermoplastic resin fiber (A) used in this invention preferably has a glass transition temperature of 40°C or higher, more preferably 50°C or higher, furthermore preferably 55°C or higher, and particularly 60°C or higher. Again although variable depending on species of resin, the thermoplastic resin fiber (A) used in this invention preferably has a glass transition temperature of 200°C or lower, more preferably 150°C or lower, and furthermore preferably 100°C or lower. In particular, when a polyamide resin is used as the thermoplastic resin fiber (A) in these controlled ranges, the effect of this invention will be demonstrated more successfully.

Although variable depending on species of the resin, the thermoplastic resin fiber (A) used in this invention preferably has a melting point of 150°C or higher, more preferably 180°C or higher, and furthermore preferably 200°C or higher. Again although variable depending on species of the resin, the thermoplastic resin fiber (A) used in this invention preferably has a melting point of 320 °C or lower, more preferably 310°C or lower, and furthermore preferably 280°C or lower. In particular, when a polyamide resin is used as the thermoplastic resin fiber (A) in these controlled ranges, the effect of this invention will be demonstrated more successfully.

Fiber used for the thermoplastic resin fiber (A) used in this invention is preferably selectable from polyamide resin, polyester resin, polyolefin resin, polypropylene resin, polyethylene resin, acrylic resin, polyacetal resin and polycarbonate resin. Among them, polyester resin and polyamide resin are preferable. These resins may be used independently, or two or more species may be used in combination.

The thermoplastic resin fiber (A) used in this invention is a fiber-like product of a thermoplastic resin which contains the thermoplastic resin as a major ingredient. Now the thermoplastic resin composition may be composed of the thermoplastic resin only.

The thermoplastic resin fiber (A) used in this invention is more preferably a fiber-like product of polyester resin, nylon 6, nylon 66, nylon 666 or, a polyamide resin in which 50 mol% or more of the diamine structural unit is derived from xylylenediamine; and furthermore preferably a fiber-like product of a polyamide resin composition configured by a polyamide resin in which 50 mol% or more of the diamine structural unit is derived from xylylenediamine, having a number-average molecular weight (Mn) of 6,000 to 30,000, and 0.5 to 5% by mass of the polyamide resin has a molecular weight of 1,000 or smaller.

In this invention, the thermoplastic resin fiber (A) is preferably a fiber-like product of a polyamide resin in which the diamine structural unit is derived both from *p*-xylylenediamine and *m*-xylylenediamine. In particular, the polyamide resin used in this invention is preferably a xylylenediamine-base polyamide resin, in which 50 mol% or more of diamine is derived from xylylenediamine, and is polycondensed with a dicarboxylic acid.

The polyamide resin is a xylylenediamine-base polyamide resin in which 70% by mole or more, and preferably 80% by mole or more, of the diamine structural units thereof is derived from metaxylylenediamine and/or paraxylylenediamine, and preferably 50% by mole or more, more preferably 70% by mole or more, and particularly 80% by mole or more, of the dicarboxylic acid structural units (structural unit derived from dicarboxylic acid) is derived from straight chain $\alpha,\omega$-aliphatic dicarboxylic acid having 4 to 20 carbon atoms.

Diamines other than metaxylylenediamine and paraxylylenediamine, usable as a source diamine component for the xylylenediamine-base polyamide resin, is exemplified by aliphatic diamines such as tetramethylenediamine, pentamethylenediamine, 2-methyl pentanediamine, hexamethylenediamine, heptamethylenediamine, octamethylenediamine, nonamethylenediamine, decamethylenediamine, dodecamethylenediamine, 2,2,4-trimethyl -hexamethylenediamine,and 2,4,4-trimethyl hexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and aromatic diamines such as bis(4-aminophenyl)ether, paraphenylenediamine, and bis (aminomethyl) naphthalene, all of which may be used independently, or two or more species may be used in combination.

When the diamine other than xylylenediamine is used as the diamine component, the ratio of consumption thereof is preferably 50% by mole or less of the diamine structural units, more preferably 30% by mole or less, furthermore preferably 1 to 25% by mole, and particularly 5 to 20% by mole.

The straight chain $\alpha,\omega$-aliphatic dicarboxylic acid polyamide resin having 4 to 20 carbon atoms, which may preferably be used as the source dicarboxylic acid component, is exemplified by aliphatic dicarboxylic acids such as succinic acid, glutaric acid, pimelic acid, suberic acid, azelaic acid, adipic acid, sebacic acid, undecanedioic acid, and dodecanedioic acid, all of which may be used independently or two or more species may be used in combination. Among them, adipic acid and sebacic acid are preferable since the resultant polyamide resin will have a melting point suitable for molding. Sebacic acid is particularly preferable.

Dicarboxylic acid component other than the straight chain $\alpha,\omega$-aliphatic dicarboxylic acid having 4 to 20 carbon atoms is exemplified by phthalic acid compounds such as isophthalic acid, terephthalic acid and orthophthalic acid; and naphthalene dicarboxylic acids including isomers of 1,2-naphthalene dicarboxylic acid, 1, 3-naphthalene dicarboxylic acid, 1,4-naphthalene dicarboxylic acid, 1,5-naphthalene dicarboxylic acid, 1, 6-naphthalene dicarboxylic acid, 1, 7-naphthalene dicarboxylic acid, 1,8-naphthalene dicarboxylic acid, 2,3-naphthalene dicarboxylic acid, 2, 6-naphthalene dicarboxylic acid, and 2,7-naphthalene dicarboxylic acid, all of which may be used independently, or two or more species may be used in combination.

When a dicarboxylic acid, other than the straight chain $\alpha,\omega$-aliphatic dicarboxylic acid having 4 to 20 carbon atoms is used as the dicarboxylic acid component, it is preferable to use isophthalic acid, from the viewpoint of moldability and barrier performance. The ratio of terephthalic acid and isophthalic acid is preferably 30% by mole or less of the dicarboxylic acid structural unit, more preferably 1 to 30% by mole, and particularly 5 to 20% by mole.

As a constituent of the polyamide resin other than the diamine component and the dicarboxylic acid component, also usable as a copolymerizable component are lactams such as $\varepsilon$-caprolactam and laurolactam; and aliphatic aminocarboxylic acids such as aminocaproic acid and aminoundecanoic acid, without ruining the effects of this invention.

More preferable examples of the polyamide resin include polymetaxylylene sebacamide resin, polyparaxylylene sebacamide resin, and, polymetaxylylene/paraxylylene mixed sebacamide resin obtainable by polycondensation of a mixture of xylylenediamine of metaxylylenediamine and paraxylylenediamine with sebacic acid. These polyamide resins tend to be improved in moldability.

In this invention, the polyamide resin has a number-average molecular weight (Mn) of 6,000 to 30,000, and 0.5 to 5% by mass of the polyamide resin has a molecular weight of 1,000 or smaller.

If the number-average molecular weight (Mn) falls into the range from 6,000 to 30,000, the resultant non-weave fabric or the molded article thereof tends to improve the strength. The number-average molecular weight (Mn) preferably ranges from 8,000 to 28,000, more preferably ranges from 9,000 to 26,000, furthermore preferably ranges from 10,000 to 24,000, particularly from 11,000 to 22,000, and still particularly from 12, 000 to 20, 000. In these ranges, heat resistance, elastic modulus, dimensional stability and moldability become more preferable.

Now, the number-average molecular weight (Mn) in this context is calculated by the equation below, using terminal amino group concentration $[NH_2]$ (microequivalent/g) and terminal carboxyl group concentration $[COOH]$ (microequivalent/g) of the polyamide resin.

Number-average molecular weight (Mn) = $2,000,000/([COOH]+[NH_2])$

The polyamide resin preferably contains 0.5 to 5% by mass of the polyamide resin having a molecular weight of 1,000 or smaller. By containing such amount of such low-molecular-weight component, the polyamide resin will be improved in the impregnating performance, or, improved in the fluidity through the reinforcing fibers in the polyamide resin, so that voids may be prevented from generating in the process of working, and thereby the resultant non-weave fabric and molded article may be improved in the strength and suppressed in warping. If the content exceeds 5% by mass, the low-molecular-weight component tends to breed to reduce the strength, and to degrade the appearance of the molded article.

The content of the component having a molecular weight of 1,000 or smaller is preferably 0.6 to 4.5% by mass, more preferably 0.7 to 4% by mass, furthermore preferably 0.8 to 3.5% by mass, particularly 0.9 to 3% by mass, and most preferably 1 to 2.5% by mass.

The content of the low-molecular-weight component having a molecular weight of 1,000 or smaller is adjustable by controlling melt-polymerization conditions including temperature and pressure of polymerization of polyamide resin, and rate of dropwise addition of diamine. The content of the low-molecular-weight component is adjustable to an arbitrary ratio, particularly by reducing the inner pressure of a reactor in the late stage of melt-polymerization to thereby remove the low-molecular-weight component. Alternatively, the polyamide resin manufactured by the melt-polymerization may be extracted with hot water to remove the low-molecular-weight component, or the melt-polymerization may be followed by solid phase polymerization under reduced pressure to remove the low-molecular-weight component. In the solid phase polymerization, the content of the low-molecular-weight component is adjustable to an arbitrary value, by controlling the temperature or degree of evacuation. Still alternatively, the content of the low-molecular-weight component having a molecular weight of 1,000 or smaller is adjustable by adding it later to the polyamide resin.

Now, the content of the component having a molecular weight of 1, 000 or smaller may be measured by gel permeation chromatography using "HLC-8320GPC" from Tosoh Corporation, given in standard polymethyl methacrylate (PMMA) equivalent values. The measurement may be conducted using two "TSKgel Super HM-H" columns, a 10 mmol/l sodium trifluoroacetate solution in hexafluoroisopropanol (HFIP) as a solvent, at a resin concentration of 0.02% by mass, column temperature of 40 °C, flow rate of 0.3 ml/min, and using a refractive index detector (RI). A standard curve is prepared by dissolving 6 levels of concentration of PMMA in HFIP.

In the polyamide resin composition, it is preferable that 0.01 to 1% by mass of the polyamide resin is a cyclic compound (polyamide resin). The cyclic compound in this invention means a ring-form salt composed of a diamine component and a dicarboxylic acid component which are source materials for the polyamide resin, and may be quantified by the method described below.

A pellet of the polyamide resin is milled using an ultracentrifugal mill, screened through a 0.25 mm mesh, and 10 g of the resultant powder sample having a grain size of 0.25 mm or smaller is weighed in a thimble. The sample is then extracted in 120 ml of methanol for 9 hours using a Soxhlet extractor, and the obtained liquid extract is condensed to 10 ml in an evaporator, while taking care so as not to dry up the extract. Any oligomer possibly deposit in this process is properly removed by filtration through a PTFE filter. The obtained liquid extract is diluted 50-fold with methanol, and subj ected to quantitative analysis by HPLC using a high-performance liquid chromatography apparatus from Hitachi High-Technologies Corporation, to determine the content of cyclic compound.

With such range of content of cyclic compound, the obtained non-weave fabric and the molded article using the same may be improved in strength, suppressed in warping, and tend to be further improved in dimensional stability.

The content of the cyclic compound is more preferably 0.05 to 0.8% by mass relative to the polyamide resin, and more preferably 0.1 to 0.5% by mass.

In many cases, the polyamide resin manufactured by melt polymerization contains a considerable amount of cyclic compound which is generally removed by hot water extraction. The amount of cyclic compound is controllable by controlling the degree of hot water extraction. Alternatively, the control is enabled by controlling the pressure of melt polymerization.

The polyamide resin used in this invention preferably has a molecular weight distribution (weight-average molecular weight/number-average molecular weight (Mw/Mn)) of 1.8 to 3.1. The molecular weight distribution is more preferably 1.9 to 3.0, and furthermore preferably 2.0 to 2.9. With the molecular weight distribution controlled in these ranges, the non-weave fabric having good mechanical characteristics becomes more easily obtainable.

The molecular weight distribution of polyamide resin is controllable by properly selecting species and amount of an initiator or catalyst used for polymerization, and conditions for polymerization reaction such as reaction temperature, pressure, time and so forth. The molecular weight distribution is also controllable by mixing a plurality of species of polyamide resins having different average molecular weights obtained under different polymerization conditions, or, subjecting the polyamide resin after polymerization to fractional precipitation.

The weight-average molecular weight distribution may be determined by GPC measurement. More specifically, measurement is made by using an apparatus "HLC-8320GPC" from Tosoh Corporation, two columns "TSK gel Super HM-H" from Tosoh Corporation, and a 10 mmol/l sodium trifluoroacetate solution in hexafluoroisopropanol (HFIP) as an eluent, under conditions including a resin concentration of 0.02% by mass, a column temperature of 40°C, and a flow rate of 0.3 ml/min, and using a refractive index detector (RI), thereby the molecular weight distribution is obtained as an standard polymethyl methacrylate equivalent value. A standard curve is prepared by dissolving 6 levels of concentration of PMMA dissolved in HFIP.

The polyamide resin preferably has a melt viscosity of 50 to 1200 Pa·s, when measured at a temperature 30°C higher than the melting point of polyamide resin, a shear velocity of 122 sec$^{-1}$, and a moisture content of polyamide resin of 0.06% by mass or below. With the melt viscosity controlled in this range, the polyamide resin will be more easily processed to give film or fiber. Note, for the case where the polyamide resin has two or more melting points as described later, the measurement is made assuming the peak top temperature of an endothermic peak, which appears on the higher temperature side, as the melting point.

The melt viscosity more preferably falls in the range from 60 to 500 Pa·s, and furthermore preferably from 70 to 100 Pa·s.

The melt viscosity of polyamide resin is controllable by properly selecting ratio of feed of the source dicarboxylic acid component and diamine component, polymerization catalyst, molecular weight modifier, polymerization temperature and polymerization time.

The polyamide resin preferably used here has a terminal amino group concentration ($[NH_2]$) of less than 100 microequivalent/g, more preferably 5 to 75 microequivalent/g and furthermore preferably 10 to 60 microequivalent/g, whereas preferably has a terminal carboxyl group concentration ($[COOH]$) of less than 150 microequivalent/g, more preferably 10 to 120 microequivalent/g, and furthermore preferably 10 to 100 microequivalent/g. By using the polyamide resin having such terminal group concentration values, the polyamide resin tends to become easier to stabilize the viscosity when processed into film or fiber, and tends to become more reactive with a carbodiimide compound.

Ratio of the terminal amino group concentration relative to the terminal carboxy group concentration ($[NH_2]$ / $[COOH]$) is preferably 0.7 or below, more preferably 0.6 or below, and particularly 0.5 or below. If the ratio exceeds 0.7, the polyamide resin may become difficult to control the molecular weight during polymerization.

The terminal amino group concentration may be measured by dissolving 0.5 g of polyamide resin into 30 ml of a phenol/methanol (4:1) mixed solution at 20 to 30°C under stirring, and by titrating the solution with a 0.01 N hydrochloric acid. Meanwhile, the terminal carboxy group concentration may be measured by dissolving 0.1 g of polyamide resin into 30 ml of benzyl alcohol at 200°C, and 0.1 ml of phenol red solution is added in the range from 160°C to 165°C. The obtained solution is titrated with a titrant prepared by dissolving 0.132 g of KOH into 200 ml of benzylalcohol (0.01 mol/l in terms of KOH concentration), to find an end point where the color turns from yellow to red and stays in red, based on which the concentration may be calculated.

The polyamide resin in this invention preferably has a molar ratio of reacted diamine unit relative to reacted dicarboxylic acid unit (number of moles of reacted diamine/number of moles of reacted dicarboxylic acid, occasionally be referred to as "reacted molar ratio") of 0.97 to 1.02. Within such range, it now becomes easier to control the molecular weight and molecular weight distribution of the polyamide resin within arbitrary ranges.

The reacted molar ratio is more preferably smaller than 1.0, furthermore preferably smaller than 0.995, and particularly smaller than 0.990, where the lower limit is preferably 0.975 or above, and more preferably 0.98 or above.

The reacted molar ratio (r) is given by the equation below:

$$r = (1 - cN - b(C-N)) / (1 - cC + a(C-N))$$

where,

a: M1/2

b: M2/2

c: 18.015 (molecular weight of water (g/mol))

M1: molecular weight of diamine (g/mol)

M2: molecular weight of dicarboxylic acid (g/mol)

N: terminal amino group concentration (equivalent/g)

C: terminal carboxy group concentration (equivalent/g)

For the case where the diamine components and the dicarboxylic acid components which each have a variety of molecular weights, are used as the monomers for synthesizing the polyamide resin, M1 and M2 are of course calculated depending on the ratio of mixing (molar ratio) of the monomers mixed as the source materials. Note that, the molar ratio of monomers initially fed agrees with the reacted molar ratio, if a synthesis tank forms a perfect closed system. Actual synthetic apparatus, however, cannot be a perfect closed system, so that the molar ratio of initial feeding does not always agree with the reacted molar ratio. Even it is considered that the initially fed monomers do not always react completely, so that again the molar ratio of initial feedings does not always agree with the reacted molar ratio. Accordingly, the reacted molar ratio means the molar ratio of monomers actually reacted which is determined based on the terminal group concentration of the resultant polyamide resin.

The reacted molar ratio of the polyamide resin is controllable by selecting proper values for reaction conditions which include molar ratio of initial feeding of the source dicarboxylic acid component and the source diamine component, reaction time, reaction temperature, speed of dropwise addition of xlylenediamine, pressure in the reaction tank, and start time of evacuation. Specifically, those may be referred to description JP-A-2012-153749, the contents of which are incorporated by reference.

Now, the melting point is a peak top temperature of an endothermic peak observed in DSC (differential scanning calorimetry). Glass transition point is measured by once heating and melting a sample so as to cancel any possible influences of thermal history on the crystallinity, and then re-heating the sample. Measurement may be made by using, for example, "DSC-60" from Shimadzu Corporation, approximately 5 mg of sample, nitrogen as an atmospheric gas fed at a flow rate of 30 ml/min, and at a heating rate of 10°C/min from room temperature up to a temperature not lower than a predicted melting point, where the melting point is determined based on the peak top temperature of an endothermic peak observed for the molten sample. The glass transition point is determined by rapidly cooling the molten polyamide resin on dry ice, then heating again at a rate of 10°C/min up to a temperature not lower than the melting point.

The polyamide resin also preferably has at least two melting points. The polyamide resin having at least two melting points is advantageous, since improving tendencies of heat resistance and moldability of the non-weave fabric when molded will be obtained.

The polyamide resin having at least two melting points is preferably exemplified by a polyamide resin having at least two melting points in which 70 mol% or more of the diamine structural unit is derived from xylylenediamine, 50 mol% or more of the dicarboxylic acid is derived from sebacic acid, the xylylenediamine unit comprises 50 to 100 mole% of a unit derived from paraxylylenediamine and 0 to 50 mole% of a unit derived from metaxylylenediamine, and the number-average molecular weight (Mn) is 6,000 to 30,000.

In such a polyamide resin, the two melting points generally fall into the range of 250 to 330°C, preferably 260 to 320°C, more preferably 270 to 310°C, particularly preferably 275 to 305°C. The polyamide resin having at least two of melting points falling into the above preferable range has good heat resistance, moldability in molding the non-weave fabric.

The method for obtaining the polyamide resin having at least two melting points may be referred to description JP-A-2012-153749, the contents of which are incorporated by reference.

Into the resin composition composing the thermoplastic resin fiber used in the present invention, a thermoplastic resin other than the above resin may be added. In particular, the other polyamide resin which may be used in combination with the above polyamide resin is exemplified by polyamide 66, polyamide 6, polyamide 46, polyamide 6/66, polyamide 10, polyamide 612, polyamide 11, polyamide 12, hexamethylenediamine, polyamide 66/6T composed of adipic acid and terephthalic acid, hexamethylenediamine, and polyamide 6I/6T composed of isophthalic acid and terephthalic acid. The amount of mixing of these compounds is preferably 5% by mass or less of the polyamide resin composition, and more preferably 1% by mass or less.

Into the resin composition composing the thermoplastic resin fiver used in the present invention, an elastomer may be added. The elastomer component usable here may be any of publicly known elastomers such as polyolefin-base elastomer, diene-base elastomer, polystyrene-base elastomer, polyamide-base elastomer, polyester-base elastomer, polyurethane-base elastomer, fluorine-containing elastomer, and silicone-base elastomer, among which polyolefin-base elastomer and polystyrene-base elastomer are preferable.

Also preferably used as the elastomer is modified elastomer which is modified by $\alpha,\beta$-unsaturated carboxylic acid and acid anhydride thereof, or by acrylamide and derivative thereof, in the presence or absence of a radical initiator, in order to make the elastomer compatible with the polyamide resin.

The content of such other resin or the elastomer is generally 30% by mass or less in the thermoplastic resin composition, preferably 20% by mass or less, and particularly 10% by mass or less.

To the polyamide resin composition used in this invention, it is also possible to add additives which include stabilizers such as antioxidant and heat stabilizer, hydrolysis resistance modifier, weathering stabilizer, matting agent, UV absorber, nucleating agent, plasticizer, dispersion aid, flame retarder, anti-static agent, anti-coloring agent, anti-gelling agent, colorant, and mold releasing agent, without ruining purposes and effects of this invention. Details of these additives may be referred to description in paragraphs [0130] to [0155] of Japanese Patent No. 4894982, the contents of which are incorporated by reference.

The content of the thermoplastic resin fiber (A) used in this invention in the non-weave fabric is preferably 20 to 98% by weight, more preferably 25 to 80% by weight, and furthermore preferably 30 to 70% by weight. Only a single species of the thermoplastic resin fiber (A) may be used independently, or two or more species thereof may be used. When two or more species are used, the total content preferably falls in the above-described ranges.

<Carbon Fiber (B)>

Although not specifically limited, regarding species or the like, the carbon fiber (B) used in this invention is preferably selected from PAN-based carbon fiber obtainable by carbonizing polyacrylonitrile, and pitch-based carbon fiber using pitch, among which the PAN-based carbon fiber is more preferable.

The carbon fiber (B) used in this invention is generally a fiber cut in an arbitrary length from a filament of the thermoplastic resin fiber.

The carbon fiber (B) used in this invention preferably has an average fiber length of 1 to 20 mm, more preferably 1 to 15 mm, furthermore preferably 2 to 15 mm, furthermore preferably 3 to 15 mm, and particularly 4 to 15 mm. With the average fiber length controlled to 1 mm or longer, the molded article using the non-weave fabric will have an improved mechanical strength, meanwhile when controlled to 20 mm or shorter, particularly 15 mm or shorter, the dispersibility in the non-weave fabric will be improved.

The carbon filament used in this invention preferably has a fineness of 100 to 50000 D, more preferably 500 to 40000 D, furthermore preferably 1000 to 10000 D, and particularly 1000 to 3000 D. With these ranges, the resultant non-weave fabric will have an improved elastic modulus and strength.

The carbon filament used in this invention preferably has 500 to 60000 f, more preferably 500 to 50000 f, furthermore preferably 1000 to 30000 f, and particularly 1500 to 20000 f.

The carbon filament contained in the non-weave fabric of this invention preferably has an average tensile modulus of 50 to 1000 GPa, and more preferably 200 to 700 GPa. Within these ranges, the non-weave fabric will have an improved tensile modulus.

The carbon fiber (B) used in this invention is preferably treated over the surface thereof with a treatment agent. The treatment agent preferably has a sizing function which sizes the carbon fibers (B) into filament.

More specifically, preferable examples of the treatment agent are exemplified by epoxy-based resins such as bisphenol-A type epoxy resin; and vinyl ester-based resin such as bisphenol-A type vinyl ester resin, which is a sort of epoxyacrylate resin having an acryl group or methacryl group in one molecule, novolac type vinyl ester resin, and brominated vinyl ester resin. Urethane modified resins of epoxy-based resin and vinyl ester-based resin are also acceptable.

The amount of use of the treatment agent is preferably 0.001 to 1.5% by mass of the carbon fiber (B), more preferably 0.008 to 1.0% by mass, and furthermore preferably 0.1 to 0.8% by mass. With these ranges, the effect of this invention will be demonstrated more successfully.

The content of the carbon fiber (B) used in this invention is preferably 1% by weight or more and less than 80% by weight in the non-weave fabric, more preferably 20% by weight or more 70% by weight or less, and furthermore preferably 25 to 60% by weight. Only a single species of the carbon fiber (B) may be used, or, two or more species of them may be used. When two or more species are used, the total content preferably falls in the above-described ranges.

<Relation between Thermoplastic Resin Fiber (A) and Carbon Fiber (B)>

In the non-weave fabric of this invention, a difference between the average fiber length of the thermoplastic resin fiber (A) and the average fiber length of the carbon fiber (B) is preferably 10 mm or smaller, more preferably 5 mm or smaller, and furthermore preferably 1 mm or smaller. With the difference between values of the average fiber length controlled in these ranges, the thermoplastic resin fiber (A) and the carbon fiber (B) are more uniformly dispersed in the non-weave fabric, and thereby a better non-weave fabric will be obtained.

In this invention, the ratio of mixing (ratio by weight) of the thermoplastic resin fiber (A) and the carbon fiber (B) is preferably 99:1 to 25:75, more preferably 80:20 to 30:70, and furthermore preferably 70:30 to 40: 60. With the ratio of mixing controlled in these ranges, the effect of this invention will be demonstrated more successfully. In this invention, it is particularly preferable that the total content of the thermoplastic resin fiber (A) and the carbon fiber (B) accounts for 90% by weight or more of the non-weave fabric.

<Thermoplastic Resin (C)>

The thermoplastic resin (C) used in this invention has a glass transition temperature (Tg) lower than the glass transition temperature of the thermoplastic resin fiber (A), wherein the ratio of content of which in the non-weave fabric accounts for 1 to 50% by weight of the total content of the thermoplastic resin fiber (A) and the thermoplastic resin (C).

The glass transition temperature (Tg) of the thermoplastic resin (C) used in this invention is preferably 10 to 50°C lower, and more preferably 20 to 30 °C lower, than the glass transition temperature of the thermoplastic resin fiber (A).

The thermoplastic resin (C) used in this invention preferably has a glass transition temperature of 20 to 80°C, and more preferably 30 to 60°C.

The thermoplastic resin (C) used in this invention preferably has a melting point of 100 to 250°C, and more preferably 120 to 230°C. Also an amorphous resin showing no melting point is preferably used.

By controlling the content of the thermoplastic resin (C) used in this invention within the predetermined range, and by selecting the glass transition temperature of the thermoplastic resin (C) lower than the glass transition temperature of the thermoplastic resin fiber (A), it now becomes possible to successfully bind the thermoplastic resin fiber (A) and the carbon fiber (B), and, to yield the non-weave fabric in which the thermoplastic resin fiber (A) keeps its intact fiber form.

The fibrous thermoplastic resin (C) used in this invention is generally manufactured by using a thermoplastic resin filament which is a bundle of thermoplastic resin fibers, wherein the total fineness per one thermoplastic resin filament is preferably 37 to 600 D, more preferably 50 to 500 D, and furthermore preferably 150 to 400 D. The filament of the thermoplastic resin (C) is preferably configured by 1 to 200 f, more preferably 1 to 100 f, furthermore preferably 5 to 80 f, and particularly 20 to 70 f. Within these ranges, the filament of the thermoplastic resin (C) will show an improved dispersion in the resultant non-weave fabric.

The filament of the thermoplastic resin (C) used in this invention preferably has a tensile strength of 2 to 10 gf/d. Within such range, the effect of this invention will more likely be demonstrated successfully.

In the non-weave fabric of this invention, the difference between the average fiber length of the thermoplastic resin fiber (A) and the average fiber length of the thermoplastic resin (C) is preferably 10 mm or smaller, more preferably 5 mm or smaller, and furthermore preferably 1 mm or smaller. With the difference of the average fiber lengths controlled within these ranges, the effect of this invention will be demonstrated more successfully.

The thermoplastic resin (C) used in this invention is suitably selected in relation to the glass transition temperature of the thermoplastic resin fiber (A), wherein examples of which include polycarbonate resin, polyphenylene oxide resin, polyamide resin, polyester resins such as polybutylene terephthalate resin and polyethylene terephthalate resin, polypropylene resin, polyphenylene sulfide resin, liquid crystal polymer, polystyrene resin, rubber reinforced polystyrene resin, acrylonitrile/styrene copolymer, and acrylonitrile/butadiene/styrene copolymer (ABS), among which polyester resin is preferable.

While the thermoplastic resin (C) may be composed of the above described resins only, it may also contain some additive having been generally added to the resin molded article. The additive is exemplified by the elastomer and other additives described above in the paragraphs in relation to the thermoplastic resin composition. Also the amount of mixing and so forth preferably fall in the same ranges.

The thermoplastic resin (C) used in this invention may be a synthetic product or may be a commercially available product. As the commercially available product, usable is the thermoplastic resin (C) marketed under the trade name of Novaduran (polybutylene terephthalate (from Mitsubishi Engineering-Plastics Corporation)), for example.

The content of the thermoplastic resin (C) used in this invention is preferably 2 to 40% by weight, relative to the total content of the thermoplastic resin fiber (A) and the thermoplastic resin (C), more preferably 3 to 30% by weight, and furthermore preferably 5 to 20% by weight. Only a single species of the thermoplastic resin (C) may be used, or two or more species may be used. When two or more species are used, the total content preferably falls in the above-described ranges.

<Method for Manufacturing a Non-Weave Fabric>

The method for manufacturing a non-weave fabric of this invention characteristically includes wet-laying, in liquid, a composition which includes a thermoplastic resin fiber (A), a carbon fiber (B), and a thermoplastic resin (C) having a glass transition temperature lower than that of the thermoplastic resin fiber (A), the ratio of content of the thermoplastic resin (C) being 1 to 50% by weight of the total content of the thermoplastic resin fiber (A) and the thermoplastic resin (C). Since the method for manufacturing a non-weave fabric of this invention employs wet-laying, which is equivalent to so-called wet papermaking, so that the non-weave fabric may be manufactured without needing any special equipment or the like. Wet-laying in liquid now means a technique by which fibers suspended in liquid (preferably in water) are scooped on a screen, and drained (dewatered) through the screen, to obtain a film or sheet.

More specifically, in the method for manufacturing a non-weave fabric of this invention, a slurry containing the thermoplastic resin fiber (A), the carbon fiber (B), and the thermoplastic resin (C) is prepared. Water is generally used as the solvent for the slurry. For more uniform dispersion in the slurry, the solid concentration of liquid (slurry) is preferably controlled to 0.1 to 5% by weight. Also a dispersant or flocculant may be added to the slurry. The dispersant is exemplified by surfactant and viscosity modifier. The floccurant is exemplified by aluminum sulfate, cationic polymer and anionic polymer.

A single mat scooped on the screen from the slurry, or plurality of mats after stacked, are dried. The drying may be effected by heating or pressing. The heating is preferably effected at a temperature not lower than a glass transition temperature (Tg) of the thermoplastic resin (C), preferably in the range from Tg to Tg+40°C, more preferably from Tg to Tg+30°C, and furthermore preferably from Tg+5 to Tg+20°C. By heating the thermoplastic resin (C) at or above the glass transition temperature thereof, the solvent in the non-weave fabric may be removed, and the thermoplastic resin fiber (A) and the carbon fiber (B) may suitably be bound, wherein the non-weave fabric advantageously keeps the intact fiber form of the thermoplastic resin fiber (A). Means for heating used here may be any of known means, including cylinder dryer and yankee dryer. For the purpose of further increasing the strength of the non-weave fabric of this invention, or further consolidating a functional material, in order to reduce pressure loss in a heating regeneration type organic rotor member, the functional material may be hot-pressed using a hot pressing machine, hot calendar machine or the like.

The non-weave fabric of this invention preferably has a weight per unit area of 20 to 1000 $g/m^2$, more preferably 30 to 500 $g/m^2$, furthermore preferably 30 to 200 $g/m^2$, furthermore preferably 30 to 150 $g/m^2$, and particularly 30 to 80 $g/m^2$. Within these ranges, the non-weave fabric will be easy to handle.

The non-weave fabric of this invention preferably has a tensile strength after hot-pressed of 10 to 100 MPa, more preferably 10 to 70 MPa, and furthermore preferably 15 to 60 MPa.

The non-weave fabric of this invention preferably has a tensile modulus after hot-pressed, measured according to JIS K7162, of 2000 to 6000 MPa, more preferably 2500 to 5500 MPa, and furthermore preferably 2900 to 5000 MPa.

<Applications of Non-Weave Fabric>

The non-weave fabric of this invention may be used for a variety of applications.

To take an instance, the non-weave fabric of this invention may be hot-pressed and used as the sheet or the film of this invention. While the non-weave fabric of this invention may be hot-pressed on its own, it may be hot pressed together with other resin (thermoplastic resin (D)).

The non-weave fabric of this invention may additionally be provided with a textile layer. The examples include a multi-layered sheet obtainable by hot-pressing the non-weave fabric and the textile layer, and, a multi-layered sheet obtainable by stacking the non-weave fabric and the textile layer, and then by molding them with a thermoplastic resin (E) injected onto the non-weave fabric. Also in these cases, it is acceptable to hot-press any other resin (thermoplastic resin (D)) in addition to the non-weave fabric and the textile layer, or to stack some other resin (thermoplastic resin (D)) in addition to the non-weave fabric and the textile layer, and to mold them with the thermoplastic resin (E) injected onto the non-weave fabric.

While such sheet or film, and, the multi-layered sheet may be used on their own, they may alternatively be subjected to insert molding to obtain molded articles having a variety of shapes.

The sheet or film of this invention, and, the multi-layered sheet will be detailed below.

«Sheet or Film»

The sheet or film of this invention is obtainable by hot-pressing the non-weave fabric of this invention. By hot-pressing the non-weave fabric of this invention and the thermoplastic resin (D), the non-weave fabric of this invention may be fused and fixed with the thermoplastic resin (D). Every single sheet of the non-weave fabric and the thermoplastic resin (D) may be stacked one by one, or every two or more sheets may be stacked alternatively.

The sheet or film of this invention preferably has a thickness, after hot-pressed, of 0.05 to 1 mm, more preferably 0.08 to 0.50 mm, and furthermore preferably 0.1 to 0.30 mm.

The hot pressing may be carried out using a known hot press machine or the like. As for pressing conditions of the hot pressing machine, the pressing temperature may vary depending on the non-weave fabric and the thermoplastic resin (D) to be pressed. For the hot pressing of the non-weave fabric alone, the pressing temperature is preferably 5 to 100°C higher than the melting point of the thermoplastic resin fiber (A), and more preferably 10 to 50°C higher than the melting point of the thermoplastic resin fiber (A). Meanwhile for the hot pressing of the non-weave fabric together with the thermoplastic resin (D), the pressing temperature is preferably 5 to 100°C higher than the melting point of the thermoplastic resin (D), and more preferably 10 to 50°C higher than the melting point of the thermoplastic resin (D). The pressure of hot pressing is preferably 0.1 to 10 MPa, and more preferably 1 to 5 MPa. Within these temperature and pressure ranges, the resin and the carbon fiber can distribute in a homogenous manner, and can yield the molded article with an excellent strength.

The resin used as the thermoplastic resin (D) is preferably selectable from polyester resin, polyamide resin, polyolefin resin, polypropylene resin, polyethylene resin, acrylic resin, polyacetal resin and polycarbonate resin. Among them, polyester resin and polyamide resin are preferable. Only a single species of them may be used independently, or two or more species may be used.

The thermoplastic resin (D) and the thermoplastic resin fiber (A) preferably have the same resin as the major ingredient, wherein 90% by weight or more of composition is common for them. With such configuration, the non-weave fabric and the thermoplastic resin (D) are likely to bond more tightly.

While the thermoplastic resin (D) may be composed of the above described resins only, it may also contain some additive having been generally added to the resin molded article. The additive is exemplified by the elastomer and other additives described above in the paragraphs in relation to the thermoplastic resin composition. Also the amount of mixing and so forth preferably fall in the same ranges.

Difference between SP value of the thermoplastic resin (D) and SP value of the thermoplastic resin fiber (A) is preferably 10 $(cal/ml)^{0.5}$ or smaller, more preferably 7 $(cal/ml)^{0.5}$ or smaller, and furthermore preferably 5 $(cal/ml)^{0.5}$ or smaller. Within these ranges, the adhesiveness between the thermoplastic resin (D) and the thermoplastic resin fiber (A) will be enhanced, and the resultant molded article will have an improved strength. Now, the SP value means solubility parameter, and there are known values estimated by Small's method, Fedors' method and so forth. The value may be also calculable using a variety of computation software. Estimation using J-OCTA, according to Krevelen's equation for structure and physical property estimation, gives 9.644 $(cal/ml)^{0.5}$ for polyethylene terephthalate, 11.775 $(cal/ml)^{0.5}$ for polyamide XD10, 12.666 $(cal/ml)^{0.5}$ for polyamide MXD6, and 12.261 $(cal/ml)^{0.5}$ for nylon 6, for example.

The thermoplastic resin (D) may exist in an arbitrary form without special limitation, and may be in the form of powder or liquid applied onto of the surface of the non-weave fabric, but preferably in the form of thermoplastic resin film.

EP 2 980 292 A1

«Multi-Layered Sheet»

The multi-layered sheet of this invention may be obtainable by heat-pressing the non-weave fabric and the textile layer so as to fuse and fix the non-weave fabric and the textile layer. Alternatively, it may be obtainable by molding a stack of the non-weave fabric and the textile layer, with the thermoplastic resin (E) by injection molding, so as to fuse and fix the non-weave fabric and the textile layer. These multi-layered sheets may have some other layer besides the non-weave fabric and the textile layer. The multi-layered sheet of this invention may be formed so as to incorporate the thermoplastic resin (D), in addition to the non-weave fabric and the textile layer. Now the thermoplastic resin (D) here is same as that described above in relation to the sheet or film, and the same will apply also to the preferable ranges. The multi-layered sheet may have an adhesive layer between the non-weave fabric and the textile layer. With such configuration, the resultant multi-layered sheet will have an excellent mechanical strength, and will be less likely to warp. Details will be explained below.

<<<Textile Layer>>>

The multi-layered sheet of this invention has the textile layer. The textile layer is configured by a textile including weave fabric, knitted fabric, non-weave fabric and lace, among which weave fabric or knitted fabric is preferable, and weave fabric is more preferable. The textile preferably contains, as a major ingredient, a synthetic fiber or a natural fiber, more preferably the synthetic fiber, and furthermore preferably polyester.

The textile is readily available in various designs, and can directly present its texture. Use of the textile successfully expands the degree of freedom in designing the enclosure, and also enhances mechanical strength of the enclosure.

The textile layer may be dyed or may have printing thereon. Printing on the textile layer may be given by using dye or pigment, by any of known techniques including screen printing, rotary printing, ink jet printing and transfer printing.

<<<Adhesive Layer>>>

In this invention, the adhesive layer for bonding the non-weave fabric with the textile layer is preferably used.

The adhesive layer is a thermoplastic layer which facilitates bonding between the textile layer and the non-weave fabric. An adhesive used for the adhesive layer in this invention preferably contains a polyvinyl acetal-based resin. The adhesive used for the adhesive layer preferably has a viscosity which is low enough to allow bubbles to escape in the process of molding of the enclosure, typically at a level of 1 to 100000 MPa·s or around.

The polyvinyl acetal-based resin is preferably derived from polyvinyl alcohol (PVA) by acetalization with an aldehyde, and is more preferably polyvinyl butyral (PVB) obtainable by acetalization with butyl aldehyde.

The thus acetalized PVA resin is preferably polyvinyl acetate having a degree of saponification of 80.0 to 99.9 mol%. Polyvinyl butyral preferably has an average degree of polymerization of 500 to 3000, and more preferably 1000 to 2000.

By controlling the average degree of polymerization of the PVB resin obtainable by acetalization to 500 or larger, the PVB resin will be prevented from excessively reducing its viscosity, when heated for re-softening in the process of molding of enclosure, and will yield an improved enclosure, meanwhile by controlling the average degree of polymerization to 3000 or smaller, the PVB resin will not remain in a high-viscosity state when heated for re-softening in the process of molding of enclosure, instead allowing bubbles to escape, and again will yield an improved enclosure.

The PVB resin obtainable by acetalization may contain a plasticizer for the purpose of imparting flexibility to the adhesive layer. While species of the plasticizer is not specifically limited, it is exemplified by monobasic organic acid esters such as triethylene glycol di(2-ethylhexanoate), triethylene glycol di(2-ethylbutyrate), and triethylene glycol di (n-octylate) ; polybasic organic acid esters such as dibutyl sebacate, and dioctyl azelate; and polyglycerin derivatives such as polyoxypropylene polyglyceryl ether, and polyethylene glycol polyglyceryl ether.

The adhesive layer may also be configured by any resin selected from polyvinyl acetal-based resin, ethylene/vinyl acetate copolymer-based resin, ethylene/acrylic copolymer-based resin, propylene-based resin, propylene/1-butene copolymer-based resin, propylene/isobutene copolymer-based resin, styrene/propylene/isobutene copolymer-based resin, styrene/isoprene copolymer-based resin, styrene/isoprene/isobutene copolymer-based resin, and styrene/isoprene/butene copolymer-based resin.

<<<Method of Hot Pressing>>>

The multi-layered sheet of this invention may be obtainable by hot-pressing the non-weave fabric and the textile layer. The hot pressing temperature may suitably be determined, depending on the materials composing the non-weave fabric and the textile layer to be pressed.

In this invention, it is also preferable to press, under heating, the thermoplastic resin (D) in addition to the non-weave fabric and the textile layer. In this case, the textile layer may be hot-pressed, after the non-weave fabric and the thermoplastic resin (D) are hot-pressed, or, the non-weave fabric and the thermoplastic resin (D) layer and the textile layer may be stacked and hot-pressed. It is preferable to hot-press them further together with the adhesive layer.

Every single sheet of the non-weave fabric and the thermoplastic resin (D) layer may be stacked one by one, or every two or more sheets may be stacked alternatively.

The hot pressing may be carried out using a known hot press machine or the like.

Pressing conditions of the hot pressing machine may suitably be determined depending on species of the non-weave fabric and the thermoplastic resin (D) to be pressed. For an exemplary case where the non-weave fabric containing the thermoplastic resin fiber (A) is hot-pressed with the textile layer, the pressing temperature is preferably 5 to 50°C higher than the melting point of the thermoplastic resin fiber (A), and more preferably 10 to 30°C higher than the melting point of the thermoplastic resin fiber (A).

The pressure of hot pressing is preferably 0.1 to 10 MPa, and more preferably 1 to 5 MPa.

The thickness of the multi-layered sheet of this invention is preferably 0.05 to 2.0 mm, more preferably 0.08 to 1.5 mm, furthermore preferably 0.1 to 1.0 mm, and particularly 0.15 to 0.5 mm.

<< Molded Article and Method for Manufacturing Multi-Layered Sheet»

The molded article of this invention is characteristically obtainable by molding, by insert molding, the non-weave fabric with a thermoplastic resin (E). It is also preferable to mold, by insert molding, the multi-layered sheet of this invention with the thermoplastic resin (E). Also the multi-layered sheet which is obtainable by stacking the non-weave fabric of this invention and the textile layer, and molding them with the thermoplastic resin (E) by injection molding (generally by insert molding) onto the non-weave fabric, may be manufactured according to the method for manufacturing a molded article of this invention. Details will be given below.

Insert molding is a method for producing a molded article, by preliminarily placing the non-weave fabric of this invention or the like in a cavity of an injection molding mold, and by injecting (filling by injection) the thermoplastic resin (E) into the outer space (generally onto the non-weave fabric). The thermoplastic resin (D) or the adhesive layer may be molded together with the non-weave fabric. By the insert molding, it now becomes possible to enhance the strength of the molded article, or to form a fine irregularity.

Alternatively, the non-weave fabric of this invention and the textile layer may be preliminarily placed in the cavity, and the thermoplastic resin (E) may be injected (filled) into the outer space (generally onto the non-weave fabric side), to thereby produce the multi-layered sheet. Still alternatively, the multi-layered sheet, which is obtainable by stacking the non-weave fabric and the textile layer, and then by molding them with the thermoplastic resin (E) injected onto the non-weave fabric, may further be molded with the thermoplastic resin (E) by injection molding, to thereby produce an insert-molded article. In this case, the thermoplastic resin (E) used for forming the multi-layered sheet and the thermoplastic resin (E) used for insert molding may be same or different.

For better adhesiveness, the thermoplastic resin (E) preferably contains, as a major ingredient, the same resin as the thermoplastic resin (D) or the thermoplastic resin fiber (A), wherein it is more preferable that 90% by weight or more of composition is common for them. Details will be given below.

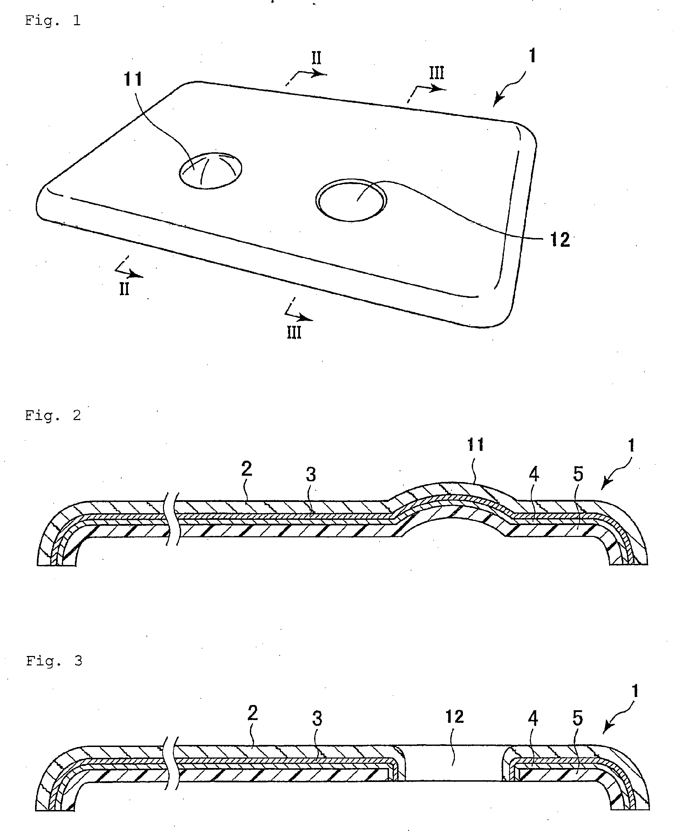

An exemplary molded article of this invention, manufactured by insert molding, is shown in FIG. 1. Typically shown in FIG. 1 is an enclosure 1 having an inverted-tray structure, wherein one projected part 11 and one opening 12 are provided to the bottom part of the inverted-tray structure. FIG. 2 is a cross sectional view taken along line II-II in FIG. 1, and FIG. 3 is a cross sectional view taken along line III-III in FIG. 1.

The enclosure 1 has a textile layer 2 and a non-weave fabric (preferably, a film or sheet 4 configured by hot-pressing the non-weave fabric and a thermoplastic resin (D)) (also simply referred to as sheet 4, hereinafter), which are bonded while placing an adhesive layer 3 in between, and a thermoplastic resin (E) layer 5 which is bonded and fixed to the sheet 4 while being drawn up in the gaps around the individual fibers of the sheet 4, or otherwise being occasionally impregnated.

The thermoplastic resin (E) layer contains the thermoplastic resin (E) as a major ingredient. A source material of the thermoplastic resin (E) layer is typically heated and melted in an injection molding machine, and injected into a female mold having the sheet 4 preliminarily inserted therein with the non-weave fabric directed upward. The thermoplastic resin (E) is bonded and fixed to the sheet, while being drawn up in the gaps around the individual fibers of the sheet, or otherwise being impregnated in some cases. In the process of solidification under cooling of the thermoplastic resin (E) layer, the sheet 4 shrinks to tighten the bonding and fixation with the thermoplastic resin (E) layer.

The thermoplastic resin (E) is preferably selected from polyester resin, polyamide resin, polyolefin resin, polypropylene resin, polyethylene resin, acrylic resin, polyacetal resin and polycarbonate resin. Among them, polyester resin and polyamide resin are preferable. They may be used independently, or in combination of two or more species.

While the thermoplastic resin (E) may be composed of the above-described resin only, it may contain some other ingredient. More specifically, the thermoplastic resin (E) may contain an additive having been generally added to resin molded articles. The additives are exemplified by the elastomer and so forth which are described previously in relation to the thermoplastic resin composition. Also the amount of mixing and so forth preferably fall in the same ranges.

The thermoplastic resin (D) and the thermoplastic resin fiber (A) preferably have the same resin as the major ingredient, wherein 90% by weight or more of composition is common for them. It is also preferably reinforced with a filler such as glass filler or carbon filler.

Difference between the SP value of the thermoplastic resin (E) and the SP value of the thermoplastic resin fiber (A) is preferably 10 or smaller, more preferably 7 or smaller, and furthermore preferably 5 or smaller. Within these ranges, the adhesiveness between the thermoplastic resin (E) and the thermoplastic resin fiber (A) will be enhanced, and the resultant molded article will have an improved strength.

In the enclosure 1 typically illustrated in FIG. 1 to FIG. 3, the thermoplastic resin (E) is bonded and fixed to the sheet 4, while being drawn up in the gaps around the fibers, so that the adhesiveness of the sheet 4 to the thermoplastic resin (E) layer 5 is improved by the anchor effect. This also suppresses the textile layer 2 from wrinkling, or from deforming thereon picture or pattern. This also makes the enclosure 1 mechanically stronger and unlikely to warp. Of course, the pattern on the surface of the enclosure 1 is selectable in various ways by changing the textile.

While illustrated in FIG. 1 as the inverted tray structure with the sheet 4 on the surface thereof, the enclosure 1 may of course have any other shape.

An exemplary process of the insert molding will be described below.

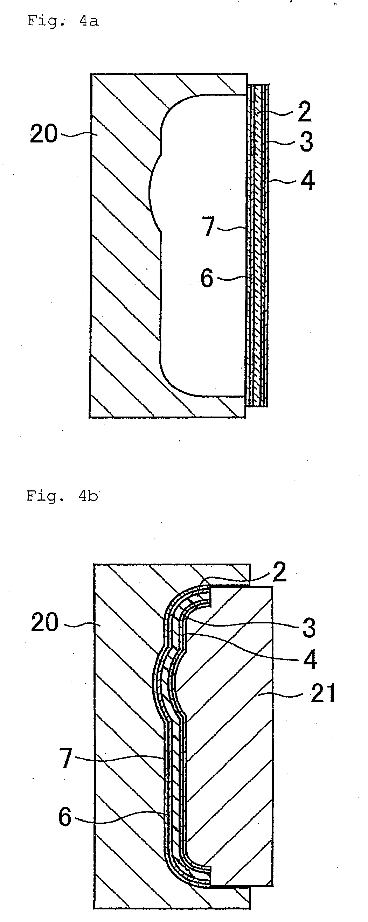

In the insert molding, typically as illustrated in FIG. 4a, the multi-layered sheet which is composed of the textile layer 2, the adhesive layer 3, and the sheet 4 is placed on a female mold 20 (fixed mold) of a press machine, with the sheet 4 faced outward. The multi-layered sheet may preliminarily be cut into a predetermined shape.

Next, typically as illustrated in FIG. 4b, a male mold 21 (movable mold) of the press machine is moved towards the female mold 20, so as to push the multi-layered sheet which is put on the female mold 20 into the female mold 20. In this way, the multi-layered sheet of this invention is molded into a shape determined by the female mold 20 and the male mold 21. The molding is generally effected by hot pressing.

The thus molded multi-layered sheet of this invention is taken out from the press machine. In this process, the periphery of the molded multi-layered sheet of this invention may be deburred using a laser cutter or a cutting mold (cutting unit).

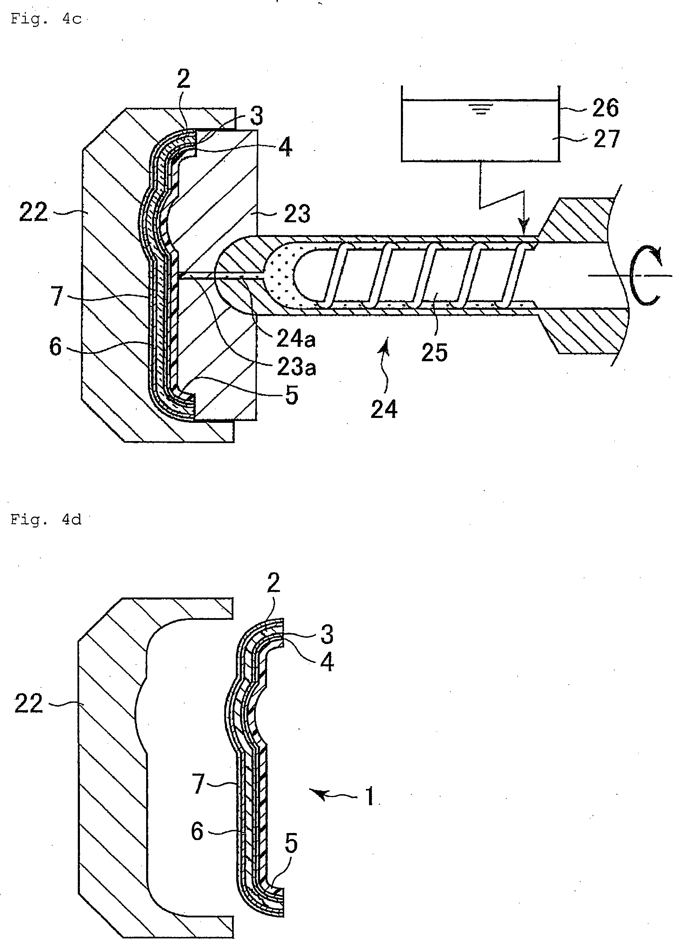

Next, typically as illustrated in FIG. 4c, the multi-layered sheet molded by the press machine is placed in a metal mold 22 with the sheet 4 faced outward. Next, a male mold 23 (injection molding mold) is moved towards the multi-layered sheet housed in the metal mold 22. An injection hole 24a of an injection machine 24 is pressed against an injection molding hole 23a of a male mold for injection molding 23, and thermoplastic resin (E) source 27 in a tank 26 is injected by rotating an screw for injection molding 25, into a space specified by the multi-layered sheet and the male mold for injection molding 23. In this process, the thermoplastic resin (E) source 27 impregnates into the gaps around the fibers of the sheet, and the sheet 4 and the thermoplastic resin (E) source 27 shrink in the process of solidification under cooling of the thermoplastic resin (E) source 27, to thereby strengthen the adhesion with the sheet 4.

Lastly, typically as illustrated in FIG. 4d, after the injection-molded thermoplastic resin (E) source 27 is solidified under cooling, the injection machine 24 and the male mold for injection molding 23 are separated from the metal mold 22, and the enclosure (molded article of this invention) 1 is taken out.

In the insert molding, the surface of the multi-layered sheet may be protected by a protective sheet 7. This sort of protective sheet is exemplified by polyethylene terephthalate (PET) sheet. The protective sheet 7 and the multi-layered sheet are preferably bonded using an adhesive film 6. This sort of adhesive film is exemplified by PVA film. The PVA film is preferably water soluble, and is typically composed of Solublon (registered trademark) from Aicello Corporation. The PVA-based film 6 may also be a PVA coating material coated over the PET sheet 7.

The female mold 20 and the male mold 21 configure the press machine, whereas the female mold 22, the male mold for injection molding 23, and the injection machine 24 configure the injection molding machine. In a modified example, the press machine and the injection molding machine may be integrated, and the female mold 20 may be used as the female mold 22. In this case, the male mold for injection molding 23 is moved towards the multi-layered sheet of this invention which is molded in the female mold 20.

According to FIG. 4c, the thermoplastic resin (E) source 27 impregnates into the gaps around the fibers of the sheet, and in the process of solidification of the thermoplastic resin (E) source 27 under cooling, the sheet 4 and the thermosetting resin (E) layer 5 shrink. As a consequence, the thermoplastic resin (E) layer 5 and the sheet 4 will be bonded more tightly.

According to FIG. 4a to FIG. 4d, the multi-layered sheet of this invention is improved in the adhesiveness to the thermosetting resin (E) layer 5, prevented from wrinkling and deforming picture or pattern, and can make the enclosure 1 mechanically stronger and unlikely to warp.

The insert-molded article of this invention may, for example, have a region of 0.1 to 2 mm thick and 10 cm$^2$ wide or more.

Having described the embodiment of this invention regarding the enclosure merely as a general molded article, target fields to which the embodiment of this invention is applicable include decorative articles which are manufactured by in-mold molding and have surface coated layers, and are more specifically sundries including container and stationery, enclosures of electronic instrument and home appliance including mobile phone and notebook-sized computer, enclosures of interior and exterior equipment for building and automobile, and enclosures of exterior equipment of aircraft, railway vehicle and vessel.

EXAMPLE

This invention will further be detailed referring to Examples. All materials, amounts of use, ratios, details of processes, and procedures of processes described in Examples below may appropriately be modified without departing from the spirit of this invention. This invention is therefore not limited to the specific Examples described below.

<Exemplary Synthesis 1: Synthesis of Polymetaxylylene Sebacamide (MXD10)>

Sebacic acid (TA grade, from Itoh Oil Chemicals Co., Ltd.) was melted in a reaction can under heating at 170°C, the content was kept stirred, metaxylylenediamine (from Mitsubishi Gas Chemical Company) was slowly added dropwise so as to adjust the molar ratio to sebacic acid to 1:1, and the temperature was elevated to 240°C. After the dropwise addition, the temperature was elevated to 260°C. After completion of the reaction, the content was drawn out in strands, and pelletized using a pelletizer. The obtained pellets were placed in a tumbler, and allowed to proceed solid phase polymerization under reduced pressure, to thereby obtain polyamide (MXD10) with a controlled molecular weight.
The polyamide resin (MXD10) was found to have a melting point of 191°C, a glass transition temperature (Tg) of 60°C, and a number-average molecular weight of 30,000.

<Exemplary Synthesis 2: Synthesis of Polymeta/Paraxylylene Sebacamide (MPXD10)>

According to the description in Example of JP-A-2012-021062, polyamide MPXD10 [polyamide resin composed of MXDA (metaxylylenediamine)/PXDA (paraxylylenediamine) = 70:30 and sebacic acid] was synthesized. The obtained polyamide resin was found to have a melting point of 215°C, a glass transition point of 63°C, and a relative viscosity of 2.3.

<Exemplary Manufacture 1: Manufacture of Film Composed of MXD10>

MXD10 obtained above was fed to a single-screw extruder having a 30 mm-diameter cylinder with a T-die (PTM-30, PLABOR Research Laboratory of Plastics Technology Co. , Ltd.). After melted and kneaded at a cylinder temperature of 260°C, and a screw rotation speed of 30 rpm, MXD10 was extruded through the T-die into a film form, which was solidified on a cooling roll to obtain a film having a predetermined thickness.

<Exemplary Manufacture 2: Manufacture of Film Composed of MPXD10>

A film was obtained in the same way as in Exemplary Manufacture 1, except that MPXD10 was used in place of MXD10.

<Exemplary Manufacture 3: Manufacture of Film Composed of PET>

A film was obtained in the same way as in Exemplary Manufacture 1, except that PET was used in place of MXD10, and the cylinder temperature was set to 280°C.
<Manufacture of Non-Weave Fabric>

(Example 1)

Polyamide resin MPXD10 obtained above was melt-spun to obtain a multifilament with a number of filaments of 34 and a fineness of 210 D. The thus-obtained filament was cut into fibers having an average fiber length of 12 mm.
Polybutylene terephthalate (Novaduran, from Mitsubishi Engineering-Plastics Corporation, melting point = 224°C, Tg = 40°C) was melt-spun to obtain a multifilament having a number of filaments of 34 and a fineness of 210 D. The thus-obtained filament was cut into fibers having an average fiber length of 12 mm.
A carbon fiber (TR50S, from Mitsubishi Rayon Co., Ltd.) was cut into fibers having an average fiber length of 12 mm.
These three species of fibers were dispersed into water according to ratio by weight summarized in Table, thoroughly mixed, and scooped on a metal screen to obtain a sheet. The obtained sheet was dried at 80°C under hot air, to obtain a non-weave fabric having a weight per unit area of 80 g/m$^2$.

(Examples 2 to 10, and Comparative Example 1)

A non-weave fabric was manufactured in the same way as in Example 1, except that the species, average fiber length and amount of mixing of the thermoplastic resin fiber (A), the carbon fiber (B) and the thermoplastic resin (C) were altered according to those summarized in Table below.

PET: polyethylene terephthalate (from Nippon Unipet Co., Ltd., Grade 1101, melting point = 252°C, Tg = 83°C)

The average fiber length of the thermoplastic resin fiber (A) and the carbon fiber (B) was controlled by the length of cutting.

In Comparative Example 1, PET described above was used as the thermoplastic resin (C).

(Comparative Examples 2, 3)

Films composed of resin sources summarized in Table below (with the thickness again summarized in Table below) were used in place of the non-weave fabric.

<Evaluation of Non-Weave Fabric>

(Appearance (Non-Uniformity))

The appearance of the obtained non-weave fabric was visually observed.
Good: having uniform appearance overall.
Somewhat poor: aggregate of carbon fiber slightly observed, with some degree of uneven color.
Poor: aggregate of carbon fiber apparently observed, with a lot of uneven color.

<Manufacture of Hot-Pressed Film>

Each of the non-weave fabrics obtained in the individual Examples and Comparative Examples was hot-pressed at 290°C under a pressure of 1 MPa, to obtain a hot-pressed film. Note that the hot pressing was not carried out in Comparative Examples 2 and 3.

<Evaluation of Hot-Pressed Film>

(Tensile Strength)

Tensile strength was measured according to the methods described in ISO 527-1 and ISO 527-2 under conditions including a measurement temperature of 23°C, an inter-chuck distance of 50 mm, and a tensile speed of 50 mm/min.

(Tensile Modulus)

The tensile characteristic of each film was tested according to JIS K7127 and K7161, to determine tensile modulus (MPa). For the measurement, Strograph from Toyo Seiki Seisaku-Sho Ltd. was used under conditions including a width of test piece of 10 mm, an inter-chuck distance of 50 mm, a tensile speed of 50 mm/min, a measurement temperature of 23°C, and a measurement humidity of 50%RH.

[Table 1]

| | | | Example 1 | Example 2 | Example3 | Example4 | Example5 | Example6 |
|---|---|---|---|---|---|---|---|---|
| Non-Weave Fabric | Thermoplastic resin (A) | Kind of resin | MPXD10 | MPXD10 | MPXD10 | MPXD10 | MPXD10 | MPXD10 |
| | | Glass transition temperature (°C) | 63 | 63 | 63 | 63 | 63 | 63 |
| | | Average fiber length (mm) | 12 | 6 | 3 | 12 | 12 | 2 |
| | | Amount (parts by weight) | 45 | 57 | 68 | 68 | 25 | 45 |
| | | Number of filament (f) | 34 | 34 | 34 | 34 | 34 | 34 |
| | | Fineness (D) | 210 | 210 | 210 | 210 | 210 | 210 |
| | Carbon fiber (B) | Average fiber length (mm) | 12 | 6 | 3 | 12 | 12 | 2 |
| | | Amount (parts by weight) | 50 | 40 | 30 | 30 | 50 | 50 |
| | Thermoplastic resin (C) | Glass transition temperature (°C) | 40 | 40 | 40 | 40 | 40 | 40 |
| | | Average fiber length (mm) | 12 | 6 | 3 | 12 | 12 | 2 |
| | | (C)/((A)+(C)) (% by weight) | 10 | 5 | 2.86 | 2.86 | 50 | 10 |
| | | Amount (parts by weight) | 5 | 3 | 2 | 2 | 25 | 5 |
| | | Number of filament (f) | 34 | 34 | 34 | 34 | 34 | 34 |
| | | Fineness (D) | 210 | 210 | 210 | 210 | 210 | 210 |
| | Evaluation | Appearance (Non-Uniformity) | Good | Good | Good | Good | Good | Good |
| | | Weight per unit area (g/m$^2$) | 80 | 35 | 80 | 80 | 80 | 80 |
| Hot-Pressed Film | Thickness of Hot-Pressed Film (mm) | | 0.19 | 0.1 | 0.18 | 0.19 | 0.19 | 0.19 |
| | Evaluation | Tensile Strength (MPa) | 58 | 45 | 34 | 58 | 55 | 35 |
| | | Tensile Modulus (MPa) | 4730 | 3766 | 2910 | 4770 | 4680 | 3250 |

[Table 2]

| | | | Example 7 | Example 8 | Example 9 | Example 10 | Comparative Example 1 | Comparative Example 2 | Comparative Example 3 |
|---|---|---|---|---|---|---|---|---|---|
| Non-Weave Fabric | Thermoplastic resin (A) | Kind of resin | PET | PET | PET | MPXD10 | MPXD10 | MPXD10 | PET |
| | | Glass transition temperature (°C) | 83 | 83 | 83 | 63 | 63 | Film | Film |
| | | Fiber length (mm) | 10 | 10 | 15 | 17 | 12 | | |
| | | Amount (parts by weight) | 30 | 54 | 54 | 45 | 45 | | |
| | | Number of filament (f) | 36 | 36 | 36 | 34 | 34 | | |
| | | Fineness (D) | 75 | 75 | 75 | 210 | 210 | | |
| | Carbon fiber (B) | Fiber length (mm) | 10 | 15 | 2 | 17 | 12 | Not added | Not added |
| | | Amount (parts by weight) | 40 | 40 | 40 | 50 | 50 | | |
| | Thermoplastic resin (C) | Glass transition temperature (°C) | 40 | 40 | 40 | 40 | 83 | Not added | Not added |
| | | Fiber length (mm) | 10 | 10 | 15 | 17 | 12 | | |
| | | (C)/((A)+(C)) (% by weight) | 50 | 10 | 10 | 10 | 10 | | |
| | | Amount (parts by weight) | 30 | 6 | 6 | 5 | 5 | | |
| | | Number of filament (f) | 34 | 34 | 34 | 34 | 34 | | |
| | | Fineness (D) | 210 | 210 | 210 | 210 | 210 | | |
| | Evaluation | Appearance (Non-Uniformity) | Good | Good | Somewhat poor | Somewhat poor | Poor | - | - |
| | | Weight per unit area (g/m²) | 80 | 80 | 80 | 80 | 80 | - | - |

(continued)

| | | Example 7 | Example 8 | Example 9 | Example 10 | Comparative Example 1 | Comparative Example 2 | Comparative Example 3 |
|---|---|---|---|---|---|---|---|---|
| Thickness of Hot-Pressed Film (mm) | | 0.18 | 0.18 | 0.18 | 0.2 | 0.18 | 0.17 | 0.18 |
| Hot-Pressed Film | Evaluation | Tensile Strength (MPa) | 50 | 47 | 17 | 40 | 25 | 18 | 10 |
| | | Tensile Modulus (MPa) | 4520 | 4430 | 3110 | 3800 | 2600 | 2000 | 1900 |

In Table 1 and Table 2 above, the amounts of mixing of the thermoplastic resin fiber (A), the carbon fiber (B), and the thermoplastic resin (C) are given in ratio of mixing (ratio by weight). "(C) / ((A) + (C)) (% by weight)" of the thermoplastic resin (C) means the ratio of the thermoplastic resin (C) (% by weight) relative to the total amount of the thermoplastic resin fiber (A) and the thermoplastic resin (C) (the same will apply also to Table 4 described later).

It was understood from Tables that Examples 1 to 10 representing the non-weave fabric of this invention showed good appearance, and high mechanical strength when formed into hot-pressed films. However in Example 10, the fiber was somewhat likely to disentangle from the non-weave fabric. In Comparative Example 1, in which the glass transition temperature of the thermoplastic resin (C) is higher than the glass transition temperature of the thermoplastic resin fiber (A), the fiber was very likely to disentangle from the non-weave fabric, and the hot-pressed film showed only a poor strength as a consequence. Comparative Examples 2 and 3, using the resin film only, were found to show poor mechanical strength.

<Manufacture of Molded Article>

(Example 11)

The non-weave fabric obtained in Example 1 was stacked with a film (50 $\mu$m thick) made of polyamide MXD10, hot-pressed at 260°C under 1 MPa, then cooled, to thereby obtain a sheet having the non-weave fabric and the thermoplastic resin (D). The obtained sheet was re-heated using an IR heater and molded in dies. The tensile strength and tensile modulus of the thus-obtained sheet were measured in the same way as for the non-weave fabric.

(Example 12)

The non-weave fabric obtained in Example 1 was stacked with a film (50 $\mu$m thick) made of polyamide MPXD10, hot-pressed at 290°C under 1 MPa, then cooled, to thereby obtain a sheet having the non-weave fabric and the thermoplastic resin (D). The obtained sheet was re-heated using an IR heater and molded in dies. The tensile strength and tensile modulus of the thus-obtained sheet were measured in the same way as for the non-weave fabric.

[Table 3]

|  | Example 11 | Example 12 |
|---|---|---|
| Laminated structure | MXD10/Non-weave fabric/MXD10 | MPXD10/Non-weavefabric/MPXD10 |
| Thickness (mm) | 0.25 | 0.19 |
| Tensile Strength (MPa) | 68 | 151 |
| Tensile Modulus (MPa) | 3850 | 6960 |

It was understood from Table that the films, obtainable by stacking and hot-pressing the non-weave fabrics of this invention with the resin film, showed good tensile strength and high tensile modulus.

(Example 13)

The non-weave fabrics obtained in Example 1 and the films (50 $\mu$m thick) made of polyamide MPXD10 were alternatively stacked, hot-pressed at 280°C under 2 MPa, then cooled, to obtain a sheet of 0.7 mm thick. The thus obtained sheet was re-heated using an IR heater, and molded in dies. The obtained molded article was set in a mold of an injection molding machine, and molded with polyamide MPXD10 by insert molding. A good bonding was confirmed.

<Manufacture of Multi-Layered Sheet>

(Examples 14 and 15)

Non-weave fabrics were manufactured in the same way as in Example 1, except that the species, average fiber length and amount of mixing of the thermoplastic resin fiber (A), the carbon fiber (B) and the thermoplastic resin (C) were altered according to those summarized in Table below.

Each of the non-weave fabrics obtained above and the thermoplastic resin (D) film obtained previously were alternatively stacked according to the combinations summarized in Table 4, and then hot-pressed with a textile layer (a plain weave fabric made of polyester, weight per unit area = 164.5 g/m²), at a temperature of a mold, faced to the thermoplastic resin (D), of 280°C and under a pressure of 2 MPa, to obtain a 10 cm x 10 cm multi-layered sheet.

(Examples 16 and 17)

Non-weave fabrics were manufactured in the same way as in Example 1, except that the species, average fiber length and amount of mixing of the thermoplastic resin fiber (A), the carbon fiber (B) and the thermoplastic resin (C) were altered according to those summarized in Table below.

Each of the non-weave fabrics obtained above and the thermoplastic resin (D) film obtained previously were alternatively stacked according to the combinations summarized in Table 4, further stacked with a textile layer (a plain weave fabric made of polyester, weight per unit area = 164.5 $g/m^2$) while placing an adhesive (polyvinyl acetal-based resin) in between, and then hot-pressed at a temperature of a mold, faced to the thermoplastic resin (D), of 280°C and under a pressure of 2 MPa, to obtain a 10 cm x 10 cm multi-layered sheet.

(Comparative Example 4)

A film composed of a resin source listed in Table below (with the thickness again listed in Table below) was used in place of the non-weave fabric.

The film composed of a resin obtained above and the textile layer (a plain weave fabric made of polyester, weight per unit area = 164.5 $g/m^2$) were hot pressed at a temperature of a mold, faced to the film composed of a resin, of 280°C under 2 MPa, to thereby obtain a 10 cm x 10 cm multi-layered sheet.

<Evaluation of Multi-Layered Sheet>

«Warping»

Each multi-layered sheet obtained above was placed on a flat plate, and the height of lifting at four apexes of the edged was measured. The sheet was judged as warped, if the total height was 2 mm or more.

«Tensile Strength»

Tensile strength was measured according to the methods described in ISO 527-1 and ISO 527-2 under conditions including a measurement temperature of 23°C, an inter-chuck distance of 50 mm, and a tensile speed of 50 mm/min.

[Table 4]

| | | Example 14 | Example 15 | Example 16 | Example 17 | Com parative Example 4 |
|---|---|---|---|---|---|---|
| Non-Weave Fabric | Thermoplastic resin fiber (A) | MPXD10 | MPXD10 | MPXD10 | PET | MPXD10 |
| | Glass transition temperature (°C) | 63 | 63 | 63 | 83 | Film (Thickness 0.17mm ) |
| | Average fiber length (mm) | 12 | 12 | 17 | 12 | |
| | Amount (parts by weight) | 45 | 45 | 45 | 30 | |
| | Number of filament (f) | 34 | 34 | 34 | 34 | |
| | Fineness (D) | 210 | 210 | 210 | 210 | |
| | Carbon fiber (B) | | | | | Not added |
| | Average fiber length (mm) | 12 | 12 | 17 | 12 | |
| | Amount (parts by weight) | 50 | 50 | 50 | 50 | |
| | Thermoplastic resin fiber (C) | | | | | Notadded |
| | Glass transition temperature (°C) | 40 | 40 | 40 | 40 | |
| | Average fiber length (mm) | 12 | 12 | 12 | 12 | |
| | Amount (parts by weight) | 5 | 5 | 5 | 20 | |
| | (C)/((A)+(C)) (% by weight) | 10 | 10 | 10 | 40 | |
| | Number of filament (f) | 34 | 34 | 34 | 34 | |
| | Fineness (D) | 210 | 210 | 210 | 210 | |
| | Weight per unit area (g/m²) | 80 | 80 | 80 | 80 | |
| Thermoplastic resin (D) | Kind of resin | MXD10 | MPXD10 | MPXD10 | MPXD10 | Not used |
| | Thickness (μm) | 100 | 50 | 100 | 100 | |
| Adhesive layer | | Absent | Absent | Present | Present | Absent |
| Evaluation for multi-layered sheet | Thickenss (mm) | 0.3 | 0.28 | 0.35 | 0.35 | 0.3 |
| | Warping | Not warped | Not warped | Not warped | Not warped | Warped |
| | Tensile Strength (MPa) | 80 | 70 | 61 | 54 | 18 |

The multi-layered sheets of this invention were found to be free from warping, and to show high mechanical strength.

In contrast, the multi-layered sheets manufactured without using the non-weave fabric but using a thin resin film failed in obtaining a sufficient level of strength. Another trial of manufacture of a thin film, by mixing 50% by weight of carbon fiber relative to MPXD10, revealed that the manufacture was practically difficult.

(Example 18)

A stack of the non-weave fabric obtained in Exemplary Manufacture 3 and the textile layer was set in a mold of an injection molding machine, with the non-weave fabric faced to the hot runner, and polyamide MPXD10 was injected onto the non-weave fabric to thereby mold the multi-layered sheet. The polyamide MPXD10 and the non-weave fabric and the textile layer were found to be bonded thoroughly.

(Example 19)

Insert Molding

The multi-layered sheet obtained in Example 15 was re-heated using an IR heater and molded in dies. The obtained molded article was set in a mold of an injection molding machine, and molded with polyamide MPXD10 by insert molding. Polyamide MPXD10 was found to be tightly bound to the multi-layered sheet.

REFERENCE SIGNS LIST

| | |
|---|---|
| 1 | enclosure |
| 11 | projected part |
| 12 | opening |
| 2 | textile layer |
| 3 | adhesive layer |
| 4 | sheet with non-weave fabric |
| 5 | thermoplastic resin (E) layer |
| 6 | protective sheet |
| 7 | adhesive film |
| 20 | female mold |
| 21 | male mold |
| 22 | metal mold |
| 23 | male mold for injection molding |
| 23a | injection molding hole |
| 24 | injection machine |
| 24a | injection hole |
| 25 | screw for injection molding |
| 26 | tank |
| 27 | thermoplastic resin (E) source |

**Claims**

1. A non-weave fabric comprising:

   a thermoplastic resin fiber (A);
   a carbon fiber (B); and
   a thermoplastic resin (C) having a glass transition temperature lower than a glass transition temperature of the thermoplastic resin fiber (A),
   which comprises the thermoplastic resin (C) in a content of 1 to 50% by weight, relative to a total content of the thermoplastic resin fiber (A) and the thermoplastic resin (C).

2. The non-weave fabric of Claim 1, wherein the carbon fiber (B) has an average fiber length of 1 to 15 mm.

3. The non-weave fabric of Claim 1 or 2, wherein the thermoplastic resin fiber (A) has an average fiber length of 1 to 15 mm.

4. The non-weave fabric of any one of Claims 1 to 3, wherein the thermoplastic resin (C) is in a form of a fiber.

**5.** The non-weave fabric of any one of Claims 1 to 3, wherein the thermoplastic resin (C) is in a form of a fiber having an average fiber length of 1 to 15 mm.

**6.** The non-weave fabric of any one of Claims 1 to 5, which has a difference between the average fiber length of the thermoplastic resin fiber (A) and the average fiber length of the carbon fiber (B) of 10 mm or smaller.

**7.** The non-weave fabric of any one of Claims 1 to 6, which has a ratio of mixing (ratio by weight) of the thermoplastic resin fiber (A) and the carbon fiber (B) of 99:1 to 25:75.

**8.** The non-weave fabric of any one of Claims 1 to 7, wherein the thermoplastic resin fiber (A) is selected from polyester resin, polyamide resin, polyolefin resin, polypropylene resin, polyethylene resin, acrylic resin, polyacetal resin and polycarbonate resin.

**9.** A sheet or a film obtainable by hot-pressing the non-weave fabric described in any one of Claims 1 to 8.

**10.** A sheet or a film obtainable by hot-pressing the non-weave fabric described in any one of Claims 1 to 8, with a thermoplastic resin (D).

**11.** The sheet or the film of Claim 10, wherein the thermoplastic resin (D) is in a form of a thermoplastic resin film.

**12.** A multi-layered sheet obtainable by hot-pressing the non-weave fabric described in any one of Claims 1 to 8 with a textile layer, or, a multi-layered sheet obtainable by stacking the non-weave fabric described in any one of Claims 1 to 8 and a textile layer, and injecting a thermoplastic resin (E) onto the non-weave fabric to mold.

**13.** The multi-layered sheet of Claim 12, further comprising an adhesive layer between the non-weave fabric and the textile layer.

**14.** The multi-layered sheet of Claim 13, wherein the adhesive layer contains a polyvinyl acetal-based resin.

**15.** The multi-layered sheet of any one of Claims 12 to 14, further comprising a thermoplastic resin (D), in addition to the non-weave fabric and the textile layer.

**16.** The multi-layered sheet of Claim 15, wherein the thermoplastic resin (D) is in a form of a resin film.

**17.** A molded article obtainable by molding the non-weave fabric described in any one of Claims 1 to 8, or, the sheet or the film described in any one of Claims 9 to 11, or, the multi-layered sheet described in any one of Claims 12 to 16, with a thermoplastic resin (E) by insert molding.

**18.** A method for manufacturing a non-weave fabric comprising: wet-laying, in liquid, a composition which comprises a thermoplastic resin fiber (A), a carbon fiber (B), and a thermoplastic resin (C) having a glass transition temperature lower than a glass transition temperature of the thermoplastic resin fiber (A);
wherein the composition comprises the thermoplastic resin (C) in a content of 1 to 50% by weight, relative to a total content of the thermoplastic resin fiber (A) and the thermoplastic resin (C).

**19.** The method for manufacturing a non-weave fabric of Claim 18, wherein the wet-laying in liquid is followed by heating at a temperature not lower than the glass transition temperature of the thermoplastic resin (C).

**20.** The method for manufacturing a non-weave fabric of Claim 18 or 19, wherein the carbon fiber (B) has an average fiber length of 1 to 15 mm.

**21.** The method for manufacturing a non-weave fabric of any one of Claims 18 to 20, wherein the thermoplastic resin fiber (A) has an average fiber length of 1 to 15 mm.

**22.** The method for manufacturing a non-weave fabric of any one of Claims 18 to 21, wherein the thermoplastic resin (C) is in a form of a fiber.

**23.** The method for manufacturing a non-weave fabric of any one of Claims 18 to 22, wherein the thermoplastic resin (C) is in a form of a fiber having an average fiber length of 1 to 15 mm.

**24.** The method for manufacturing a non-weave fabric of any one of Claims 18 to 23, wherein the composition has a difference between the average fiber length of the thermoplastic resin fiber (A) and the average fiber length of the carbon fiber (B) of 10 mm or smaller.

**25.** The method for manufacturing a non-weave fabric of any one of Claims 18 to 24, wherein the composition has a ratio of mixing (ratio by weight) of the thermoplastic resin fiber (A) and the carbon fiber (B) of 99:1 to 25:75.

**26.** The method for manufacturing a non-weave fabric of any one of Claims 18 to 25, wherein the thermoplastic resin fiber (A) is selected from polyester resin, polyamide resin, polyolefin resin, polypropylene resin, polyethylene resin, acrylic resin, polyacetal resin and polycarbonate resin.

Fig. 1

Fig. 2

Fig. 3

Fig. 4a

Fig. 4b

Fig. 4c

Fig. 4d

## INTERNATIONAL SEARCH REPORT

| International application No. |
| --- |
| PCT/JP2014/057477 |

A. CLASSIFICATION OF SUBJECT MATTER
*D04H1/541(2012.01)i, B29C45/14(2006.01)i, D04H1/4242(2012.01)i*

According to International Patent Classification (IPC) or to both national classification and IPC

B. FIELDS SEARCHED

Minimum documentation searched (classification system followed by classification symbols)
D04H1/00-18/04, B29C45/00-45/84

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2006-524755 A (Frenzelit-Werke GmbH & Co. KG),<br>02 November 2006 (02.11.2006),<br>claims 7, 22; paragraph [0022]; examples 1, 2<br>& US 2007/0123132 A1<br>claims 45, 58; paragraph [0022]; examples 1, 2<br>& JP 4708330 B2          & EP 1618252 A1<br>& WO 2004/097111 A1      & DE 10318858 A<br>& DE 502004001217 D      & CA 2522935 A<br>& AT 336615 T            & KR 10-2005-0121245 A<br>& ES 2271875 T           & RU 2005131731 A<br>& BRA PI0409720          & MX PA05011339 A<br>& KR 10-1172727 B | 1-7,9-16,<br>18-25<br>17<br>8,26 |

☒ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 June, 2014 (03.06.14) | 10 June, 2014 (10.06.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2014/057477 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | WO 2012/037225 A2 (SABIC INNOVATIVE PLASTICS<br>IP B.V.),<br>22 March 2012 (22.03.2012),<br>claims 1, 3, 4, 26, 27<br>& JP 2014-503694 A        & US 2012/0065283 A1<br>& EP 2616579 A2        & CN 103210132 A | 1-7,18-25<br>8,26 |
| Y | JP 2012-206446 A (Teijin Ltd.),<br>25 October 2012 (25.10.2012),<br>claims<br>(Family: none) | 17 |
| A | JP 8-11863 B2 (Chisso Corp.),<br>07 February 1996 (07.02.1996),<br>claims<br>& JP 1-239147 A | 1-26 |
| A | JP 9-11374 A (Asahi Fiber Glass Co., Ltd.),<br>14 January 1997 (14.01.1997),<br>claims; paragraph [0014]<br>(Family: none) | 1-26 |
| P,X | WO 2014/021084 A1 (Kuraray Co., Ltd.),<br>06 February 2014 (06.02.2014),<br>examples 4, 7 to 9<br>(Family: none) | 1-9,18-26 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002266217 A
- JP 2011190549 A
- JP 2004034527 A
- WO 2012105664 A
- WO 2012105665 A
- JP 2012153749 A
- JP 4894982 B
- JP 2012021062 A